Europäisches Patentamt

European Patent Office

Office européen des brevets

(11) Numéro de publication : **0 493 252 A1**

# (12) DEMANDE DE BREVET EUROPEEN

(21) Numéro de dépôt : **91403534.0**

(22) Date de dépôt : **24.12.91**

(51) Int. Cl.$^5$ : **F16B 45/00, // B62J7/08**

(30) Priorité : **24.12.90 FR 9016228**

(43) Date de publication de la demande :
**01.07.92 Bulletin 92/27**

(84) Etats contractants désignés :
**BE DE ES FR GB IT NL**

(71) Demandeur : **JOUBERT S.A.**
**B.P. 67 Champ De Clure**
**F-63600 Ambert (FR)**

(72) Inventeur : **Joubert, Thierry**
**12, rue du Midi**
**F-63600 Ambert (FR)**
Inventeur : **Esposito, Patsy**
**350 Clarkson Avenue**
**Brooklyn, New York 11226 (US)**

(74) Mandataire : **Schrimpf, Robert et al**
**Cabinet Regimbeau 26, Avenue Kléber**
**F-75116 Paris (FR)**

(54) **Crochet à monter sur l'extrémité d'un câble élastique, notamment d'un câble de sandow, pour agripper une barre, éventuellement un anneau.**

(57) La présente invention concerne un crochet à monter sur l'extrémité d'un câble élastique, notamment d'un câble de sandow, pour agripper une barre, ce crochet étant une pièce rigide monobloc injectée en un matériau de synthèse, qui présente une partie 1 de fixation au câble 5 coopérant avec une partie courbe 2 pour délimiter un creux 3 sensiblement plat pour recevoir ladite barre et une ouverture latérale 14 pour l'introduction de la barre dans le creux, ledit creux 3 ayant approximativement la forme d'un C présentant deux pointes qui déterminent entre elles ladite ouverture, l'une des pointes étant constituée par un bec 7 qui est recourbé vers l'intérieur du creux et l'autre pointe étant constituée par un ergot 8 qui est dirigé vers l'extérieur du creux.

FIG.1

EP 0 493 252 A1

L'invention concerne un crochet à monter sur l'extrémité d'un câble élastique, notamment d'un câble de sandow, pour agripper une barre, éventuellement un anneau.

Le but de l'invention est de fournir un crochet qui présente une grande sécurité contre un décrochage intempestif.

Ce crochet est destiné notamment aux sandows utiisés pour maintenir les bagages sur un chariot de transport ou sur une galerie de voiture.

Le crochet de l'invention est une pièce rigide monobloc injectée en un matériau de synthèse, qui présente une partie de fixation au câble coopérant avec une partie courbe pour déterminer un creux sensiblement plat pour recevoir la barre et une ouverture latérale pour l'introduction de la barre dans le creux.

Des crochets de ce type sont décrits notamment dans les publications GB-A-2 078 293, FR-A-2 131 129, FR-A-2 059 879 et GB-A-1 369 201.

Le problème se pose d'éviter un décrochage intempestif du crochet, notamment lorsque le crochet subit un choc (ou une poussée) dirigé dans le sens de la traction du câble élastique ou en sens opposé, éventuellement un choc (ou une poussée) tel que ci-dessus et qui présente de plus une composante latérale dirigée vers l'ouverture du creux.

Une solution connue pour éviter ce décrochage consiste à munir le crochet d'un dispositif apte à fermer l'ouverture après l'introduction de la barre dans le creux, comme décrit par exemple dans les publications précitées.

Un tel dispositif de sécurité augmente le coût de fabrication du crochet, complique son utilisation et peut être défaillant.

La présente invention a pour but d'assurer une sécurité satisfaisante contre un décrochage intempestif, sans nécessiter un dispositif de fermeture de l'ouverture, par un simple effet de forme.

On y parvient selon l'invention par le fait que le creux du crochet a approximativement la forme d'un C présentant deux pointes qui déterminent entre elles l'ouverture d'accès au creux, l'une des pointes étant constituée par un bec qui est recourbé vers l'intérieur du creux et l'autre pointe étant constituée par un ergot qui est dirigé vers l'extérieur du creux.

La figure 1 du dessin joint illustre en vue latérale une forme de réalisation préférée du crochet de l'invention et fait apparaître d'autres particularités de l'invention.

Les figures 2 et 3 sont des schémas du crochet montrant le comportement du crochet en cas de poussée dirigée selon le sens de traction du câble (fig. 3) ou en sens opposé (fig. 2).

Le crochet représenté est une pièce injectée en polyamide (ou en polyéthylène) qui présente une partie tubulaire 1 dont le diamètre extérieur est de 15 mm environ prolongée par une partie courbe relativement plate 2 d'environ 1 cm d'épaisseur, ces deux parties coopérant pour délimiter un creux 3 ayant approximativement la forme de la lettre C et qui s'étend sur environ 4 cm entre deux parties concaves 3a et 3b qui se font face.

La partie tubulaire 1 constitue un passage axial légèrement conique 4 pour l'extrémité d'une câble de sandow 5 et ce passage débouche dans la base 3a du creux 3 par une partie évasée, sensiblement en face du sommet 3b du creux 3, l'axe 6 dudit passage se trouvant sensiblement dans le plan médian longitudinal dudit creux.

L'une des pointes dudit C est constituée par un bec 7 qui termine la courbure supérieure du creux et qui descend en courbe rentrante vers l'intérieur dudit creux tandis que l'autre pointe dudit C est constituée par un ergot ou lèvre 8 qui est formé sur le bord de la partie tubulaire et qui est dirigé vers l'extérieur du creux en prolongement de la partie courbe inférieure 3a du creux.

L'intervalle 14 entre ledit ergot et ledit bec a une longueur d'environ 2 cm et constitue l'accès dudit creux, accès qui s'étend parallèlement à la longueur du creux.

L'extrémité 8a dudit ergot et le dos 7b dudit bec sont sensiblement coplanaires (plan représenté sur la figure par la ligne 9 en traits interrompus).

Le crochet comporte un ou plusieurs anneaux rigides pour le passage d'un ou de plusieurs doigts, pour faciliter sa préhension.

Dans le cas représenté, il y a un anneau 10 sur le côté de la partie tubulaire à l'opposé dudit ergot et un anneau voisin 11 sur le côté de la partie courbe à l'opposé dudit creux.

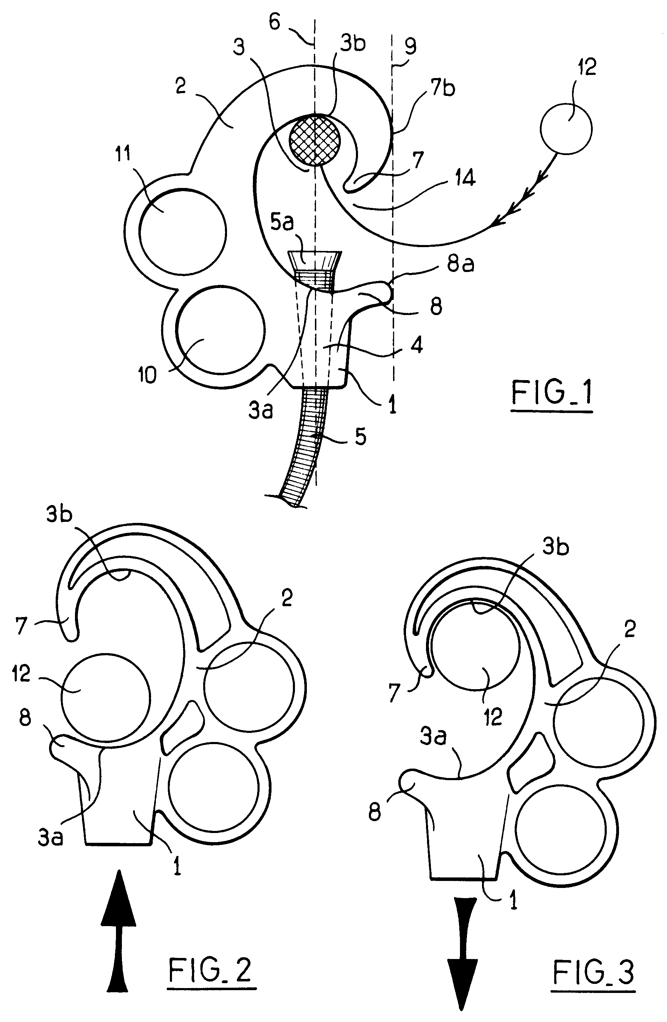

Le câble 5 est représenté sur la figure 1 avec son extrémité 5a en saillie au dessus du débouché 4a du passage 4, ceci pour la clarté de la figure, mais on comprendra que l'extrémité du câble est en fait généralement logée dans cette embouchure en sorte que la partie inférieure 3c du creux 3, partie dans laquelle débouche le passage 4, constitue une surface qui peut servir d'assise provisoire à la barre 12 lorsque le crochet est déplacé dans le sens opposé à celui de la traction du câble, comme représenté schématiquement sur la figure 2, cette assise courbe et l'ergot remontant 8 coopérant pour empêcher un échappement latéral de la barre.

En cas d'un choc s'exerçant dans le sens de la traction du câble (figure 3), la barre est retenue par la courbe supérieure du creux coopérant avec le bec descendant et rentrant 7 qui empêche un échappement latéral de la barre.

Le bec et l'ergot qui délimitent entre eux l'ouverture d'accès coopèrent en outre pour guider la barre vers le creux lors de l'introduction de la barre, ce qui facilite la mise en oeuvre du crochet.

En cas de basculement du crochet, ce qui peut se produire par exemple lorsque la tension du câble diminue, le bec et l'ergot ont tendance à renvoyer la barre vers l'intérieur du creux et donc à empêcher sa sortie. Ceci est particulièrement utile dans le cas de l'accrochage sur un chariot télescopique dont la longueur se trouve sensiblement réduite lorsque le chariot est à l'état non déployé, ce qui réduit la tension du câble.

L'invention n'est pas limitée aux modes de réalisation qui ont été décrits.

De même les dimensions qui ont été indiquées ne limitent pas la portée de l'invention et il est possible d'utiliser des dimensions différentes, en donnant la préférence à des dimensions ne différant des dimensions indiquées que de quelques millimètres, par exemple de 1 à 5 mm.

Si on le désire, bien que cela ne soit pas nécessaire, le crochet peut être muni d'une sécurité supplémentaire, par exemple d'une languette souple attenante à la partie tubulaire et qui porte spontanément mais élastiquement contre le bec de façon à constituer un portillon permettant dans un sens l'accès au creux mais empêchant la sortie en sens opposé.

**Revendications**

1. Crochet à monter sur l'extrémité d'une câble élastique, notamment d'une câble de sandow, pour agripper une barre, ce crochet étant une pièce rigide monobloc injectée en un matériau de synthèse, qui présente une partie de fixation 1 au câble 5 et coopérant avec une partie courbe 2 pour délimiter un creux 3 sensiblement plat pour recevoir ladite barre 12 et une ouverture latérale 14 pour l'introduction de la barre dans le creux, caractérisé en ce que ledit creux 3 a approximativement la forme d'un C présentant deux pointes qui déterminent entre elles ladite ouverture, l'une des pointes étant constituée par un bec 7 qui est recourbé vers l'intérieur du creux et l'autre pointe étant constituée par un ergot 8 qui est dirigé vers l'extérieur du creux.

2. Crochet selon la revendicatrion 1, caractérisé en ce qu'il présente une partie tubulaire rigide 1 prolongée par une partie courbe rigide 2 relativement plate, ces parties coopérant pour délimiter ledit creux 3.

3. Crochet selon la revendication 2, caractérisé en ce que la partie tubulaire 1 constitue un passage axial 4 pour l'extrémité dudit câble 5, ce passage débouchant dans ledit creux par une partie évasée.

4. Crochet selon la revendication 3, caractérisé en ce que l'axe 6 dudit passage se trouve sensiblement dans le plan médian longitudinal dudit creux.

5. Crochet selon l'une des revendications 2 à 4, caractérisé en ce que l'extrémité dudit ergot 8 et le dos dudit bec 7 sont sensiblement coplanaires.

6. Crochet selon l'une des revendicatirons 2 à 5, caractérisé en ce qu'il comporte un ou plusieurs anneaux rigides 10, 11 pour le passage d'un ou plusieurs doigts.

7. Crochet selon la revendication 7 , caractérisé en ce qu'il comporte un anneau 10 sur le côté de la partie tubulaire à l'opposé dudit ergot et un anneau voisin 11 sur le côté de la partie courbe 13.

8. Crochet selon l'une des revendications 2 à 7, caractérisé en ce que ledit creux s'étend entre deux parties concaves 3a, 3b qui se font face.

9. Crochet selon la revendication 8, caractérisé en ce que ledit creux s'étend sur environ 4 cm et en ce que ladite ouverture s'étend parallèlement sur environ 2 cm.

FIG_1

FIG_2

FIG_3

Office européen
des brevets

**RAPPORT DE RECHERCHE EUROPEENNE**

Numero de la demande

EP 91 40 3534

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|------------------------------------------------------|------------|--------------------|
| D,X | GB-A-2 078 293 (SOCIETE DUPRE)<br>* Page 2, lignes 31-89; figures 2,4 * | 1,2,5 | F 16 B 45/00 //<br>B 62 J 7/08 |
| D,Y | | 3,4,8 | |
| D,X | FR-A-2 131 129 (TRELANOR)<br>* Page 2, lignes 14-28; figures 1,2 * | 1 | |
| D,Y | FR-A-2 059 879 (MAILLOCHEAU)<br>* Page 2, lignes 30-34; figure 1 * | 3,4 | |
| D,Y | GB-A-1 369 201 (SIEBE GORMAN & CO., LTD)<br>* Page 1, lignes 81-96; figures 1,3,5 * | 8 | |

| | | | DOMAINES TECHNIQUES RECHERCHES (Int. Cl.5) |
|---|---|---|-----|
| | | | F 16 B<br>B 60 R<br>B 62 J<br>F 16 G |

Le présent rapport a été établi pour toutes les revendications

| Lieu de la recherche | Date d'achèvement de la recherche | Examinateur |
|----------------------|-----------------------------------|-------------|
| LA HAYE | 02-04-1992 | CALAMIDA G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)